# EUROPÄISCHE PATENTANMELDUNG

(11) **EP 4 681 904 A1**
(43) Veröffentlichungstag der Anmeldung: **21.01.2026**
(21) Anmeldenummer: 25185552.4
(22) Anmeldetag: 26.06.2025
(51) Int. Cl.: B29C 49/42, B29C 49/64, B29C 49/78, B29C 49/06, B29K 67/00, B29L 31/00

(54) **ANLAGE ZUM HERSTELLEN UND BEHANDELN VON BEHÄLTERN**

(30) Priorität: 12.07.2024 DE 102024119901
(71) Anmelder: Krones AG, 93073 Neutraubling (DE)
(72) Erfinder: MICKO, Christoph, 93073 Neutraubling (DE)
(74) Vertreter: Grünecker Patent- und Rechtsanwälte PartG mbB

(57) **Zusammenfassung**

Anlage zum Herstellen und Behandeln von Behältern, die Anlage umfassend eine Heizeinrichtung mit einer Vielzahl von Heizelementen zum Erwärmen eines durch die Heizeinrichtung transportierten Vorformlings, eine Blasformmaschine stromab der Heizeinrichtung zum Ausformen des Vorformlings zu einem Behälter, eine Behälterbehandlungsmaschine stromab der Blasformmaschine zum Behandeln eines Behälters, wobei die Heizeinrichtung, die Blasformmaschine und die Behälterbehandlungsmaschine bei verschiedenen Produktionsgeschwindigkeiten synchron betreibbar sind, wobei die Anlage weiterhin eine Steuereinheit umfasst, die ausgebildet ist, eine Leistung wenigstens eines der Heizelemente abhängig von einer Änderung der Produktionsgeschwindigkeit der Blasformmaschine oder der Behälterbehandlungsmaschine so anzupassen, dass eine insgesamt einem Vorformling zugeführte Wärmemenge in der Heizeinrichtung einen vorgegebenen Grenzwert nicht überschreitet.

## Beschreibung

Die vorliegende Erfindung betrifft eine Anlage zum Herstellen und Behandeln von Behältern gemäß Anspruch 1 sowie ein Verfahren zum Herstellen und Behandeln von Behältern mit einer Anlage zum Herstellen und Behandeln von Behältern gemäß Anspruch 8.

### Stand der Technik

Anlagen zum Herstellen und Behandeln von Behältern sind aus dem Stand der Technik grundsätzlich bekannt. Zur Optimierung der Behandlung werden auch geblockte Anlagen genutzt, bei denen eine Blasformmaschine zum Herstellen von Behältern aus Vorformlingen und eine nachgeordnete Behandlungsmaschine, insbesondere ein Füller, miteinander prozesstechnisch verblockt sind, sodass ein kontinuierlicher Transport von in der Blasformmaschine hergestellten Behältern zu der Behandlungsmaschine erfolgt und diese ohne Unterbrechung weiter behandelt werden können. Hieraus ergeben sich Einsparpotenziale bei der notwendigen Behandlungszeit.

Jedoch ist es erforderlich, dass die Blasformmaschine und die Behälterbehandlungsmaschine synchron miteinander, insbesondere mit gleichem Durchsatz bzw. gleicher Produktionsgeschwindigkeit, betrieben werden, da andernfalls ein Leerlauf oder ein unerwünschtes Aufstauen der Behälter erfolgen kann.

Während des Betriebs, insbesondere von Füllern, kann es jedoch prozessbedingt zu notwendigen Veränderungen in der Produktionsgeschwindigkeit kommen, beispielsweise wenn aufgrund von Veränderungen des einzufüllenden Produkts ein unbeabsichtigtes Aufschäumen erfolgt. In solchen Fällen muss die Produktionsgeschwindigkeit (insbesondere der Durchsatz des Füllers) reduziert werden.

Aus der EP 3 668 697 B1 ist es bekannt, eine Behälterformmaschine und eine Behälterfüllmaschine bei unterschiedlichen Produktionsgeschwindigkeiten synchron zu betreiben, so dass diese sowohl bei voller Produktionsgeschwindigkeit als auch bei einer ersten reduzierten Produktionsgeschwindigkeit Behälterformvorgänge ausführen können.

Jedoch kann es aufgrund der Umstellung der Produktionsgeschwindigkeiten der Behälterformmaschine und der Behälterfüllmaschine zu Abweichungen in vor dem Ausformen der Vorformlinge zu Behältern vorgeschalteten Verfahren, insbesondere beim Heizen oder Erwärmen der Vorformlinge in einer Heizeinrichtung kommen, da auch hier die auf die Vorformlinge wirkende Heizleistung verändert werden, was sich nachteilig auf das Herstellungsergebnis der Behälter auswirken kann.

### Aufgabe

Ausgehend vom bekannten Stand der Technik, besteht die zu lösende technische Aufgabe somit darin, eine Anlage und ein Verfahren zum Herstellen und Behandeln von Behältern anzugeben, mit denen zuverlässig Behälter hergestellt und behandelt werden können, auch wenn sich die Produktionsgeschwindigkeiten ändern.

### Lösung

Diese Aufgabe wird erfindungsgemäß durch die Anlage zum Herstellen und Behandeln von Behältern gemäß Anspruch 1 sowie das Verfahren zum Herstellen und Behandeln von Behältern mit einer Anlage zum Herstellen und Behandeln von Behältern gemäß Anspruch 8 gelöst. Vorteilhafte Weiterbildungen der Erfindung sind in den Unteransprüchen erfasst.

Die erfindungsgemäße Anlage zum Herstellen und Behandeln von Behältern umfasst eine Heizeinrichtung mit einer Vielzahl von Heizelementen zum Erwärmen eines durch die Heizeinrichtung transportierten Vorformlings, eine Blasformmaschine stromab der Heizeinrichtung zum Ausformen des Vorformlings zu einem Behälter, eine Behälterbehandlungsmaschine stromab der Blasformmaschine zum Behandeln eines Behälters, wobei die Heizeinrichtung, die Blasformmaschine und die Behälterbehandlungsmaschine bei verschiedenen Produktionsgeschwindigkeiten synchron betreibbar sind, wobei die Anlage weiterhin eine Steuereinheit umfasst, die ausgebildet ist, eine Leistung wenigstens eines der Heizelemente abhängig von einer Änderung der Produktionsgeschwindigkeit der Blasformmaschine oder der Behälterbehandlungsmaschine so anzupassen, dass eine insgesamt einem Vorformling zugeführte Wärmemenge in der Heizeinrichtung einen vorgegebenen Grenzwert nicht überschreitet.

Unter dem Synchronen betreiben der Heizeinrichtung, der Blasformmaschine und der Behälterbehandlungsmaschine in verschiedenen Produktionsgeschwindigkeiten ist zu verstehen, dass der Durchsatz an Vorformlingen und Behältern, also die Anzahl der in der Heizeinrichtung pro Zeiteinheit erwärmten Vorformlinge und die Anzahl der in der Blasformmaschine und der Behälterbehandlungsmaschine hergestellten bzw. behandelten Behälter pro Zeiteinheit gleich ist, so dass die Anzahl der der Heizeinrichtung zugeführten Vorformlinge gleich der Anzahl der von der Blasformmaschine aus den Vorformlingen hergestellten Behälter und gleich der Anzahl der von der Behälterbehandlungsmaschine behandelten Behälter im selben Zeitraum ist.

Eine Leistung wenigstens eines Heizelements ist als eine ausgebrachte Energiemenge und insbesondere ausgebrachte Wärmemenge auf einen Vorformling zu verstehen. Als Heizelement können Infrarotstrahler oder Mikrowellenstrahler oder Laser, aber auch jede andere Form von Heizelement vorgesehen sein, wobei im Sinne der Erfindung Heizelemente vorgesehen sind, deren ausgebrachte Leistung steuer- oder regelbar ist.

Der vorgegebene Grenzwert kann beispielsweise eine Wärmemenge sein, die einem Vorformling maximal zugeführt werden darf, damit dieser entsprechend vorgegebener Produktionsparameter zu einem Behälter ausgeformt und in einem nachfolgenden Behandlungsschritt behandelt werden kann. Dieser Grenzwert kann, muss jedoch nicht zwingend, produktionsgeschwindigkeitsunabhängig sein und kann in der Steuereinheit beispielsweise in einer Datenstruktur hinterlegt sein.

Die Steuereinheit kann als Computer- oder zentrale Steuereinheit der Anlage ausgebildet sein und insbesondere einen Prozessor und zugeordnete Speicher umfassen, wobei in dem Speicher Programminstruktionen hinterlegt sein können, die bei Ausführung durch den Prozessor das Steuern der Heizeinrichtung, der Blasformmaschine und der Behälterbehandlungsanlage nach den hier beschriebenen Ausführungsformen ermöglichen.

Hinsichtlich der Ausgestaltung der Behälterbehandlungsmaschine ist die Erfindung nicht beschränkt, wobei jedoch eine Ausgestaltung als Füller zum Einfüllen eines Produkts in einen in der Blasformmaschine hergestellten Behälter bevorzugt sein kann, da insbesondere in diesen Fällen ein zuverlässiges Steuern der Temperatur der Vorformlinge vorteilhaft sein kann.

Mit der erfindungsgemäßen Anlage kann zuverlässig auch bei sich ändernden Produktionsgeschwindigkeiten ein Herstellen und Behandeln von Behältern gewährleistet werden.

Es kann vorgesehen sein, dass die Steuereinheit ausgebildet ist, die Leistung des wenigstens einen Heizelements basierend auf einer einem in der Heizeinrichtung transportierten Vorformling bereits zugeführten Wärmemenge anzupassen, sodass die zugeführte Wärmemenge in der Heizeinrichtung den vorgegebenen Grenzwert nicht überschreitet.

Wird die Produktionsgeschwindigkeit reduziert, während der Vorformling schon in der Heizeinrichtung zumindest teilweise erwärmt wurde, kann mit dieser Ausführungsform eine Einstellung der Leistung nachfolgender Heizelemente in Transportrichtung erfolgen, sodass diese entsprechend der reduzierten Transportgeschwindigkeit bzw. Produktionsgeschwindigkeit weniger Energie pro Zeiteinheit in den Vorformling einbringen, so dass im Vorformling nur eine gesamte Wärmemenge deponiert wird, die insgesamt geringer als der vorgegebene Grenzwert ist. Das Behandlungsergebnis wird hiermit verbessert.

Es kann vorgesehen sein, dass der vorgegebene Grenzwert durch eine Soll-Wärmemenge und einen Toleranzwert festgelegt ist.

Die Soll-Wärmemenge kann beispielsweise eine produktionsgeschwindigkeitsunabhängige Wärmemenge sein, die in einen Vorformling eingebracht werden muss, damit dieser in der Blasformmaschine ausgeformt und/oder in der Behälterbehandlungsmaschine zuverlässig behandelt werden kann. Es kann sich bei der Soll-Wärmemenge auch um eine Mindestwärmemenge handeln. Der Toleranzwert kann beispielsweise ein Absolutbetrag in Joule oder Kilojoule sein oder ein prozentualer Betrag, der zusammen mit der Soll-Wärmemenge den Grenzwert angibt. Beispielsweise kann der Grenzwert die Soll-Wärmemenge plus ein prozentualer Anteil der Soll-Wärmemenge, wie beispielsweise 10 %, 15 % oder 20 % sein. Der Toleranzwert kann beispielsweise abhängig von der veränderten Produktionsgeschwindigkeit sein oder abhängig von der Differenz der Produktionsgeschwindigkeiten sein. Hiermit wird eine Flexibilität beim Ändern der Produktionsgeschwindigkeit bei gleichzeitigem Einhalten von Toleranzen für das zuverlässige Herstellen und Behandeln von Behältern erreicht.

In einer Ausführungsform ist vorgesehen, dass die Behälterbehandlungsmaschine ein Füller zum Einfüllen eines Produkts in einen Behälter ist und wobei der Füller einen Sensor zum Bestimmen eines Betriebsparameters des Füllers umfasst, wobei die Steuereinheit ausgebildet ist, die Änderung der Produktionsgeschwindigkeit abhängig von einer Änderung des Betriebsparameters zu bestimmen.

Der Betriebsparameter kann beispielsweise im Zusammenhang mit dem einzufüllenden oder in den Behälter eingefüllten Produkt stehen oder eine Temperatur des Behälters bei Einfüllen des Produktes betreffen oder eine Temperatur einer produktführenden Leitung oder sonstigen Komponente des Füllers betreffen. Auch andere Realisierungen des Betriebsparameters, wie beispielsweise ein Kohlensäuregehalt des einzufüllenden Produktes, können vorgesehen sein. Mit dieser Ausführungsform wird eine Anpassung der Produktionsgeschwindigkeiten an Anforderungen, insbesondere physikalische Randbedingungen, beim Abfüllen von Produkt in die hergestellten Behälter ermöglicht, was das zuverlässige Behandeln der hergestellten Behälter verbessert.

Der Sensor kann ein Temperatursensor sein und der Betriebsparameter kann eine Produkttemperatur in einem Produkttank, einer produktführenden Leitung, einem Produktverteiler und/oder einem Füllventil sein.

Durch Berücksichtigung dieser Betriebsparameter kann durch Veränderung der Produktionsgeschwindigkeiten ein Aufschäumen von Produkt und damit eine Reduzierung der Qualität der hergestellten Behälter vermieden werden.

Die Steuereinheit kann ausgebildet sein, die Änderung der Produktionsgeschwindigkeit basierend auf der Änderung des Betriebsparameters und einer Produktionskennlinie des Füllers und/oder der Blasformmaschine zu bestimmen.

Die Kennlinie kann beispielsweise angeben, bei welcher Produktionsgeschwindigkeit welche Produkttemperatur oder welche Produkttemperaturen zulässig sind, um noch ein zuverlässiges Abfüllen des Produktes zu realisieren. Auch eine umgekehrte Abhängigkeit oder Darstellung der Kennlinie ist denkbar, also bei welchen Produkttemperaturen welche Produktionsgeschwindigkeit oder Produktionsgeschwindigkeiten zulässig sind. Durch Vergleich des gemessenen Betriebsparameters mit der Produktionskennlinie des Füllers und/oder der Blasformmaschine kann dann bestimmt werden, wie die Produktionsgeschwindigkeit verändert werden muss. Hiermit kann bei sich verändernden Betriebsparametern sichergestellt werden, dass das Herstellen und Behandeln der Behälter zuverlässig erfolgt.

Es kann vorgesehen sein, dass die Steuereinheit ausgebildet ist, basierend auf einer notwendigen Änderung der Produktionsgeschwindigkeit eine Zufuhr von Vorformlingen an die Heizeinrichtung zu blockieren und einen Transport von Vorformlingen durch die Heizeinrichtung und/oder einen Transport von Behältern durch die Blasformmaschine und/oder die Behälterbehandlungsmaschine zu steuern, wobei die Steuereinheit ausgebildet ist, die Produktionsgeschwindigkeit der Heizeinrichtung, der Blasformmaschine und der Behälterbehandlungsmaschine zu ändern, wenn keine Vorformlinge und Behälter in der Heizeinrichtung, der Blasformmaschine und der Behälterbehandlungsmaschine vorhanden sind und anschließend die Zufuhr von Vorformlingen freizugeben.

Mit dieser Ausführungsform können die Heizeinrichtung, die Blasformmaschine und der Füller zunächst leer gefahren werden, bevor eine Änderung der Produktionsgeschwindigkeit und damit auch der Heizleistung erfolgt. Dies kann den steuerungstechnischen Aufwand reduzieren, kann jedoch zu erhöhtem Ausschuss aufgrund von auszuschleusenden Behältern oder zu Ausschuss aufgrund von nicht korrekt hergestellten oder behandelten Behältern führen.

Erfindungsgemäß ist weiterhin ein Verfahren zum Herstellen und Behandeln von Behältern mit einer Anlage zum Herstellen und Behandeln von Behältern vorgesehen, die Anlage umfassend eine Heizeinrichtung mit einer Vielzahl von Heizelementen zum Erwärmen eines durch die Heizeinrichtung transportierten Vorformlings, eine Blasformmaschine stromab der Heizeinrichtung zum Ausformen des Vorformlings zu einem Behälter, eine Behälterbehandlungsmaschine stromab der Blasformmaschine zum Behandeln des Behälters, wobei die Heizeinrichtung, die Blasformmaschine und die Behälterbehandlungsmaschine bei verschiedenen Produktionsgeschwindigkeit synchron betreibbar sind, wobei die Anlage weiterhin eine Steuereinheit umfasst, die eine Leistung wenigstens eines der Heizelemente abhängig von einer Änderung der Produktionsgeschwindigkeit der Blasformmaschine oder der Behälterbehandlungsmaschine so anpasst, dass eine insgesamt einem Vorformling zugeführte Wärmemenge in der Heizeinrichtung einen vorgegebenen Grenzwert nicht überschreitet.

Mit diesem Verfahren kann zuverlässig die Herstellung und Behandlung von Behältern auch bei sich ändernden Produktionsgeschwindigkeiten erfolgen.

Es kann vorgesehen sein, dass die Steuereinheit die Leistung des wenigstens einen Heizelements basierend auf einer einem in der Heizeinrichtung transportierten Vorformling bereits zugeführten Wärmemenge anpasst, sodass die zugeführte Wärmemenge in der Heizeinrichtung den vorgegebenen Grenzwert nicht überschreitet. Hiermit kann eine zuverlässigere Anpassung der Leistung des wenigstens Einheitselements erfolgen.

In einer Ausführungsform ist vorgesehen, dass die Steuereinheit die Leistung eines stromauf eines in der Heizeinrichtung transportierten Vorformlings abhängig von der bereits zugeführten Wärmemenge und der veränderten Produktionsgeschwindigkeit und einer verbleibenden Verweildauer des Vorformlings in der Heizeinrichtung oder einer verbleibenden Wegstrecke des Vorformlings in der Heizeinrichtung steuert, sodass die die zugeführte Wärmemenge in der Heizeinrichtung den vorgegebenen Grenzwert nicht überschreitet.

Mit dieser Ausführungsform wird unter Berücksichtigung der Produktionsgeschwindigkeit und der übrigen Strecke oder Zeit des Vorformlings in der Heizeinrichtung zuverlässig die Leistung der Heizelemente bestimmt.

Der vorgegebene Grenzwert kann durch eine Soll-Wärmemenge und einen Toleranzwert festgelegt sein. Hiermit kann sichergestellt werden, dass eine Anpassung der Leistung der Heizeinrichtung die zulässige Wärmemenge, die in den Vorformling eingebracht wird, nicht überschritten wird.

Die Behälterbehandlungsmaschine kann ein Füller zum Einfüllen eines Produkts in einen Behälter sein und der Füller kann einen Sensor zum Bestimmen eines Betriebsparameters des Füllers umfassen, wobei die Steuereinheit die Änderung der Produktionsgeschwindigkeit abhängig von einer Änderung des Betriebsparameters bestimmen kann.

Hiermit kann etwaigen Veränderungen insbesondere des Produktes und damit assoziierter Betriebsparameter des Füllers zuverlässig Rechnung getragen und damit die Qualität der hergestellten und befüllten Behälter verbessert werden.

Der Sensor kann ein Temperatursensor sein und der Betriebsparameter kann eine Produkttemperatur in einem Produkttank, einer produktführenden Leitung, einem Produktverteiler und/oder einem Füllventil sein.

Da die Temperatur des Produktes Einfluss auf ein etwaiges Aufschäumen des Produktes, insbesondere bei kohlensäurehaltigen Produkten hat, kann hiermit zuverlässig auf eine Änderung der Produkttemperatur reagiert werden.

Es kann vorgesehen sein, dass die Steuereinheit die Änderung der Produktionsgeschwindigkeit basierend auf der Änderung des Betriebsparameters und einer Produktionskennlinie des Füllers und/oder der Blasformmaschine bestimmt. Diese Ausführungsform erlaubt eine zuverlässige Anpassung der Produktionsgeschwindigkeit abhängig von der Änderung des Betriebsparameters.

In einer Ausführungsform ist vorgesehen, dass die Steuereinheit basierend auf einer notwendigen Änderung der Produktionsgeschwindigkeit eine Zufuhr von Vorformlingen an die Heizeinrichtung blockiert und einen Transport von Vorformlingen durch die Heizeinrichtung und/oder einen Transport von Behältern durch die Blasformmaschine und/oder die Behälterbehandlungsmaschine steuert, wobei die Steuereinheit die Produktionsgeschwindigkeit der Heizeinrichtung, der Blasformmaschine und der Behälterbehandlungsmaschine ändert, wenn keine Vorformlinge und Behälter in der Heizeinrichtung, der Blasformmaschine und der Behälterbehandlungsmaschine vorhanden sind und anschließend die Zufuhr von Vorformlingen freigibt. Mit dieser Ausführungsform kann der steuerungstechnische Aufwand beim Verändern der Produktionsgeschwindigkeit reduziert werden.

### Kurze Beschreibung der Figuren

- Figur 1: zeigt eine schematische Ansicht einer Anlage zum Herstellen und Behandeln eines Behälters gemäß einer Ausführungsform.
- Figur 2: zeigt ein Fließschema eines Verfahrens zum Herstellen und Behandeln eines Behälters gemäß einer Ausführungsform.
- Figur 3: zeigt schematisch einen Verlauf der Temperatur einzelner Heizelemente abhängig von ihrer Position in der Heizeinrichtung bei sich verändernder Produktionsgeschwindigkeit.

### Ausführliche Beschreibung

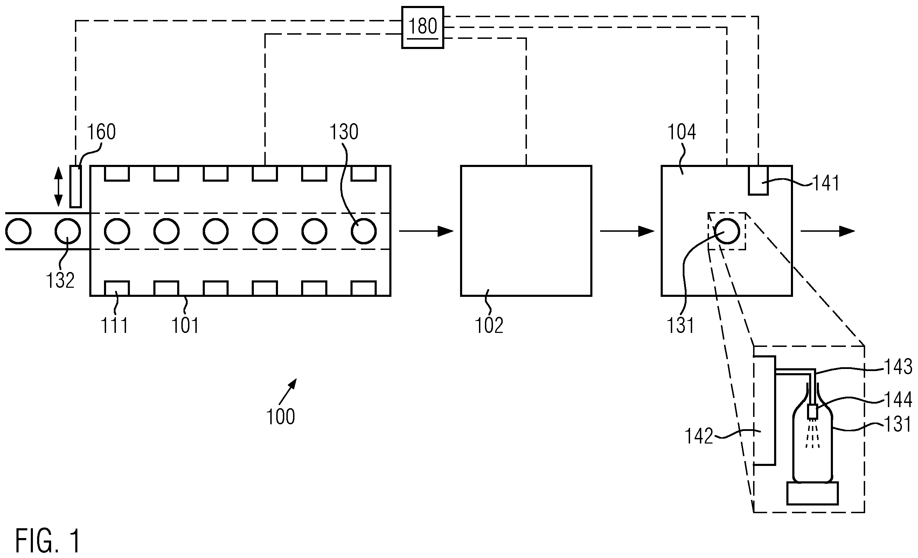

Figur 1 zeigt eine schematische Ansicht einer Anlage zum Herstellen und Behandeln von Behältern gemäß einer Ausführungsform der Erfindung.

Die Anlage umfasst eine Heizeinrichtung 101, die eine Vielzahl von Heizelementen 111 umfasst. Bevorzugt sind die Heizelemente separat ansteuerbar und insbesondere hinsichtlich ihrer ausgebrachten Leistung separat regelbar und sind ausgestaltet, einen in die Heizeinrichtung eingebrachten und durch die Heizeinrichtung hindurch transportierten Vorformling 130 zu erwärmen, insbesondere eine Wärmemenge in dem Vorformling zu deponieren. Die Heizelemente können dabei grundsätzlich beliebig ausgebildet sein. Bevorzugt sind hier jedoch Ausgestaltungen, die eine Veränderung der von den jeweiligen Heizelementen ausgebrachten Leistung in möglichst kurzen Zeitabständen ermöglichen. Dazu zählen beispielsweise Infrarot- oder Mikrowellenheizelemente sowie Heizelemente, die Laser verwenden.

Stromab der Heizeinrichtung 101 ist erfindungsgemäß eine Blasformmaschine 102 angeordnet, die die in der Heizeinrichtung erwärmten Vorformlinge übernehmen und aus diesen auf bekannte Weise durch Einwirkung von Blasdruck und optional ein Verrecken der Vorformlinge mittels einer Reckstange entlang ihrer Längsachse Behälter formen kann.

Hinsichtlich der Ausgestaltung der Blasformmaschine 102 ist die Erfindung nicht beschränkt. Es kann jedoch vorteilhaft sein, wenn die Blasformmaschine als Karussell ausgebildet ist, das entlang seiner Peripherie eine Vielzahl von Blasformen umfasst, in die jeweils ein Vorformling eingebracht werden kann, um diesen zu einem Behälter auszuformen. Die Übergabe der Vorformlinge an die Blasformmaschine kann entweder direkt, also ohne weitere Transporteinrichtungen zwischen der Heizeinrichtung und der Blasformmaschine erfolgen, oder mittels Übergabe der Vorformlinge an eine oder mehrere Transporteinrichtungen, beispielsweise bekannter Drehsterne, die die Vorformlinge aus der Heizeinrichtung entnehmen und zur Blasformmaschine befördern und an diese übergeben.

Stromab der Blasformmaschine ist eine Behälterbehandlungsmaschine 104 angeordnet, in der die in der Blasformmaschine 102 hergestellten Behälter behandelt werden können. Die Behälterbehandlungsmaschine 104 ist hinsichtlich ihrer Ausgestaltung grundsätzlich nicht beschränkt und kann beispielsweise als Etikettiermaschine oder Füller oder eine Kombination aus einem Füller und einem Verschließer ausgebildet sein. Analog zur Blasformmaschine kann, muss die Behälterbehandlungsmaschine jedoch nicht als Karussell mit einer Vielzahl von Behälteraufnahmen bzw. Behandlungsstationen an der Peripherie des Karussells ausgebildet sein.

Es kann vorgesehen sein, dass die Übergabe der in der Blasformmaschine 102 hergestellten Behälter entweder ohne weitere Transporteinrichtungen direkt an die Behälterbehandlungsmaschine erfolgt oder über weitere Transporteinrichtungen wie beispielsweise Förderbänder und oder einen oder mehrere Drehsterne bewirkt wird. Bevorzugt ist vorgesehen, dass zumindest zwischen der Blasformmaschine und der Behälterbehandlungsmaschine kein Zwischenspeichern von Behältern für unbestimmte Zeit, insbesondere in ungeordneter Weise, erfolgt, so dass ein Behälter, der in der Blasformmaschine hergestellt wurde, unmittelbar der Behälterbehandlungsmaschine zugeführt wird. Unter der unmittelbaren Zufuhr ist dabei eine Zufuhr zu verstehen, die um nicht mehr als die notwendige Transportzeit von der Blasformmaschine zur Behälterbehandlungsmaschine verzögert wird.

Erfindungsgemäß ist vorgesehen, dass sowohl die Blasformmaschine 102 als auch die Behälterbehandlungsmaschine 104 mit unterschiedlichen Produktionsgeschwindigkeiten (wenigstens eine erste und eine zweite Produktionsgeschwindigkeit) betrieben werden können. Die Produktionsgeschwindigkeit ist dabei definiert als der Durchsatz der Behälter, das heißt also die Anzahl der Behälter, die von der jeweiligen Maschine pro Zeiteinheit behandelt werden. Eine Veränderung der Produktionsgeschwindigkeit von einer ersten auf eine zweite Produktionsgeschwindigkeit kann, muss jedoch nicht umfassen, dass auch die Geschwindigkeit, mit der der Behandlungsvorgang in der Behälterbehandlungsmaschine oder der Blasformvorgang in der Blasformmaschine erfolgt, verändert wird. Eine Durchsatzveränderung kann so beispielsweise auch dadurch bewirkt werden, dass zwar die jeweiligen in der Blasformmaschine und der Behälterbehandlungsmaschine vorgenommenen Behandlungsschritte in derselben Zeit durchgeführt werden, jedoch die Transportgeschwindigkeit der Behälter in den jeweiligen Maschinen reduziert oder erhöht wird.

Die Anlage 100 umfasst erfindungsgemäß weiterhin eine Steuereinheit 180, die zumindest mit der Heizeinrichtung 101, der Blasformmaschine 102 und der Behälterbehandlungsmaschine 104 zum Zwecke des Datenaustausches und zur Übermittlung von Steuer- oder Regelsignalen verbunden ist. Die Steuereinheit 180 kann insbesondere als Computer mit Prozessor und zugeordnetem Speicher ausgestaltet sein. Erfindungsgemäß ist vorgesehen, dass die Steuereinheit 180 ausgebildet ist, bei einer Änderung der Produktionsgeschwindigkeit der Blasformmaschine oder der Behälterbehandlungsmaschine bzw. beider, die Heizeinrichtung 101 und insbesondere wenigstens ein Heizelement 111 der Heizeinrichtung so anzusteuern, dass die Leistung des wenigstens eines Heizelements 111 abhängig von der Änderung der Produktionsgeschwindigkeit der Blasformmaschine und/oder der Behälterbehandlungsmaschine so angepasst wird, dass die insgesamt einem Vorformling zugeführte Wärmemenge in der Heizeinrichtung einen vorgegebenen Grenzwert nicht überschreitet.

Dies umfasst beispielsweise bei einer Verringerung der Produktionsgeschwindigkeit der Blasformmaschine und/oder der Behälterbehandlungsmaschine, dass analog auch die Transportgeschwindigkeit der Vorformlinge durch die Heizeinrichtung reduziert werden muss. Damit verlängert sich die Verweildauer der Vorformlinge in der Heizeinrichtung und sie würden, wenn die Leistung der Heizelemente nicht angepasst werden würde, mehr Wärmeenergie durch die Heizelemente zugeführt bekommen, als dies für das Ausformen der Vorformlinge zu Behältern notwendig oder zulässig ist. Aus diesem Grund ist in einer Ausführungsform vorgesehen, dass bei einer Verringerung der Produktionsgeschwindigkeit die Steuereinheit 180 die Leistung wenigstens eines der Heizelemente verringert und bei einer Erhöhung der Produktionsgeschwindigkeit die Leistung wenigstens eines der Heizelemente erhöht.

Das Erhöhen oder Erniedrigen der Leistung wird dabei so gewählt, dass zumindest eine maximale Wärmemenge, die einem Vorformling zugeführt werden darf, um dennoch ein zuverlässiges Ausformen des Vorformlings zu einem Behälter zu ermöglichen, nicht überschritten wird und/oder eine minimal erforderliche Wärmemenge, die dem Vorformling zugeführt werden muss, um ein Ausformen des Vorformlings zu einem Behälter zu gewährleisten, nicht unterschritten wird. Diese maximalen und minimalen Werte können auch als Grenzwerte bezeichnet werden.

Es kann jedoch auch vorgesehen sein, dass die dem Vorformling insgesamt zugeführte Wärmemenge durch Regelung der Leistung der Heizelemente durch die Steuereinheit so gewählt wird, dass sie nicht nur den Grenzwert nicht überschreitet, sondern auch einen zweiten Grenzwert, der beispielsweise eine minimal einem Vorformling zugeführte Wärmemenge definiert, die ein Ausformen des Vorformlings zu einem Behälter in der Blasformmaschine ermöglicht, nicht unterschreitet.

Der Grenzwert oder die Grenzwerte kann bzw. können beispielsweise durch eine Soll-Wärmemenge etwa in Kilojoule oder Joule und einem Toleranzwert festgelegt werden. Die Soll-Wärmemenge kann beispielsweise die Wärmemenge sein, die bei idealen Produktionsbedingungen in dem Vorformling deponiert wird, um diesen für das Ausformen in der Blasformmaschine geeignet zu erwärmen. Der Toleranzwert kann ein absoluter oder prozentualer Wert sein, der zu der Soll-Wärmemenge hinzuaddiert werden kann, um die maximal zugeführte Wärmemenge als Grenzwert zu definieren. Wird ein zweiter Grenzwert, wie oben beschrieben, vorgesehen, kann von der Soll-Wärmemenge auch ein entsprechender Toleranzwert abgezogen werden, sodass sich ein Bereich um den Sollwert bestimmen lässt, in dem eine Zufuhr von Wärme in der Heizeinrichtung zulässig ist, um ein Ausformen des Vorformlings zu einem Behälter zu ermöglichen.

Hiermit kann sichergestellt werden, dass bei einer Veränderung der Produktionsgeschwindigkeit einer stromab der Heizeinrichtung angeordneten Maschine, insbesondere der Behälterbehandlungsmaschine oder der Blasformmaschine, keine zu große Wärmemenge in dem Vorformling deponiert und dessen Temperatur daher über die für das Blasformen zulässige Temperatur hinaus ansteigt.

In der Figur 1 ist beispielhaft die Behälterbehandlungsmaschine 104 als Füller ausgebildet. Eine Veränderung der Produktionsgeschwindigkeit kann insbesondere bei Ausführungsformen der Erfindung, in denen die Behälterbehandlungsmaschine als solcher Füller ausgestaltet ist, notwendig werden. Beim Betrieb eines Füllers kommt es aufgrund von Wärmeübertrag der Behälter an den Füller, aber auch aufgrund von Reibung und sonstigen internen Prozessen in dem Füller zu einer Erwärmung der Komponenten des Füllers. Dies kann auch auf ein Produkt Auswirkungen haben, das von dem Füller in den Behälter eingefüllt werden soll. Handelt es sich dabei beispielsweise um karbonisierte Produkte, etwa Getränke, kann dies beim Abfüllen zu einem Überschäumen des Produktes in dem Behälter führen, was zu Verschütten von Produkt und damit Verunreinigung der Behälterbehandlungsmaschine sowie eventuell nicht ausreichender Befüllung des jeweiligen Behälters führt. Um dieses Aufschäumen zu verhindern, kann es daher erforderlich sein, die Produktionsgeschwindigkeit des Füllers zu reduzieren. Erfindungsgemäß wird dann auch die Produktionsgeschwindigkeit der Blasformmaschine reduziert und, wie oben beschrieben, die Leistung wenigstens eines oder der Heizelemente der Heizeinrichtung angepasst.

Eine Änderung der Produktionsgeschwindigkeit kann grundsätzlich beliebige Ursachen haben. Beispielsweise kann durch einen Bediener vorgegeben werden, dass die Produktionsgeschwindigkeit reduziert oder erhöht werden soll. In einigen Ausführungsformen ist jedoch vorgesehen, dass eine Veränderung der Produktionsgeschwindigkeit, insbesondere aufgrund von sich verändernden Betriebsparametern in der Behälterbehandlungsmaschine, wie beispielsweise einem Füller, erforderlich oder wünschenswert oder notwendig wird.

Um dies rechtzeitig erkennen zu können, kann vorgesehen sein, dass die Behälterbehandlungsmaschine 104 einen Sensor 141 umfasst, der einen Betriebsparameter der Behälterbehandlungsmaschine bestimmen kann. Die Steuereinheit 180 kann ausgebildet sein, den Betriebsparameter des Sensors zu empfangen und eine Änderung der Produktionsgeschwindigkeit abhängig von der Änderung des Betriebsparameters zu bestimmen.

Am Beispiel eines Füllers als Behälterbehandlungsmaschine 104 ist in Figur 1 beispielhaft gezeigt, dass der Füller einen Produkttank 142 für in Behälter einzufüllendes Produkt sowie eine produktführende Leitung 143 und ein Füllventil 144 umfasst. Aus dem Produkttank 142 strömt das Produkt in die produktführende Leitung 143 und von dort in das Füllventil 144, von wo aus das Produkt wie gezeigt in den Behälter 131 eingefüllt wird. Der Füller kann auch weitere produktführende Leitungen oder insbesondere Verteiler für Produkt ausgehend von dem Produkttank 142 umfassen, die hier jedoch nicht dargestellt sind.

In einer Ausführungsform ist vorgesehen, dass der Sensor 141 des Füllers eine Temperatur des in dem Produkttank 142 und/oder der produktführenden Leitung 143 und/oder dem Füllventil 144 transportierten Produktes und/oder eine Temperatur des Produkttanks und/oder eine Temperatur der produktführenden Leitung und/oder eine Temperatur des Füllventils 144 selbst messen kann und diese an die Steuereinheit 180 übermitteln kann. Auch beliebige Kombinationen hiervon sind denkbar.

Die Steuereinheit kann 180 dann beispielsweise durch Vergleich der gemessenen Temperatur oder allgemein einem Betriebsparameter mit einem Sollwert bestimmen, ob eine Änderung der Produktionsgeschwindigkeit notwendig ist und sofern dies der Fall ist, die Produktionsgeschwindigkeit neu bestimmen und anschließend, wie bereits beschrieben, die Produktionsgeschwindigkeit der Behandlungsmaschine und der Blasformmaschine, anpassen und die Leistung der Heizeinrichtung bzw. wenigstens eines Heizelements der Heizeinrichtung steuern.

Da eine Veränderung des Wertes eines Betriebsparameters eine nicht lineare Änderung der Produktionsgeschwindigkeit erforderlich machen kann, d.h. also die Produktionsgeschwindigkeit steht nicht in einem linearen Zusammenhang mit dem Wert des Betriebsparameters, kann vorgesehen sein, dass in einem Speicher der Steuereinheit 180 eine Produktionskennlinie des Füllers und/oder der Blasformmaschine hinterlegt ist. Diese Produktionskennlinie kann einen funktionalen, insbesondere numerischen Zusammenhang zwischen einem Wert eines bestimmten Betriebsparameters, wie etwa der Temperatur des Produktes, und der bei diesem Wert des Betriebsparameters notwendigen oder zulässigen Produktionsgeschwindigkeit definieren. Die Produktionskennlinie muss dabei nicht als Funktion in dem Speicher der Steuereinheit hinterlegt sein, sondern kann auch für eine Vielzahl von möglichen Werten von Betriebsparametern und zugeordneten Produktionsgeschwindigkeiten in Form einer Lookup-Table, LUT hinterlegt sein, was es ermöglicht, die notwendige Produktionsgeschwindigkeit und insbesondere die Änderung der Produktionsgeschwindigkeit bei Kenntnis des Wertes des Betriebsparameters einfach zu bestimmen und durch die Steuereinheit zu bewirken.

Bevorzugt ist vorgesehen, dass eine Anpassung der Leistung der Heizelemente 111 grundsätzlich so erfolgt, dass auch in der Heizeinrichtung 101 bereits vorhandene Vorformlinge, die bereits einen gewissen Wärmeeintrag erfahren haben, nach einer Reduktion der Produktionsgeschwindigkeit, lediglich mit einer Wärmemenge beaufschlagt werden, die unterhalb des vorgegebenen Grenzwertes und/oder oberhalb eines bereits beschriebenen minimalen Grenzwertes liegt. Wenn im Folgenden das Nichtüberschreiten eines Grenzwertes beschrieben wird, so ist damit sowohl das Nichtüberschreiten eines maximalen Grenzwertes als auch das Nichtunterschreiten eines minimalen Grenzwertes gemeint.

Dies kann erreicht werden, indem in Transportrichtung stromab eines gegebenen Vorformlings die Leistung der Heizelemente reduziert wird. Die notwendige noch für jeden in der Behälterbehandlungsmaschine verbleibenden Vorformling einzubringende Wärmemenge ist abhängig von der Position des Vorformlings und es ist somit möglich, zu bestimmen, wie die Heizleistung jedes der Heizelemente verändert werden muss, um möglichst zu gewährleisten, dass jeder noch in der Heizeinrichtung verbleibende Vorformling lediglich einen Eintrag einer Wärmemenge erfährt, die zumindest unterhalb des Grenzwertes liegt.

Es kann jedoch alternativ oder zusätzlich auch vorgesehen sein, dass die Anlage ein Blockierelement 160 umfasst, das eine Zufuhr von Vorformlingen 132 an die Heizeinrichtung 101 unterbinden kann. Wird von der Steuereinheit 180 festgestellt, dass aufgrund der Veränderung eines Betriebsparameters beispielsweise eine Änderung der Produktionsgeschwindigkeit erforderlich ist, kann die Steuereinheit 180 das Blockierelement 160 betätigen, um so eine Zufuhr von Vorformlingen 132 an die Heizeinrichtung zu unterbinden. Die noch verbleibenden Vorformlinge in der Heizeinrichtung können entweder durch Anpassung der Leistung eines oder mehrerer der Heizelemente entsprechend obigen Ausführungen weiter erwärmt und der Blasformmaschine 102 zugeführt werden und anschließend in der Behälterbehandlungsmaschine 104 behandelt werden oder es kann vorgesehen sein, dass die Heizeinrichtung 101 leer gefahren wird und die Vorformlinge nicht weiter zu Behältern verarbeitet werden oder zumindest die aus den Vorformlingen hergestellten Behälter nicht in der Behälterbehandlungsmaschine behandelt werden. Dies kann insbesondere dann von Vorteil sein, wenn die Behälterbehandlungsmaschine 104 als Füller ausgeführt ist und eine Anpassung der Heizleistung nicht derart möglich ist, dass ein zuverlässiges Befüllen der Behälter gewährleistet werden kann und/oder ein Steuern der Produktionsgeschwindigkeit des Füllers nicht ausreichend schnell erfolgen kann, um ein zuverlässiges Befüllen unmittelbar nachfolgender Behälter zu gewährleisten.

Anschließend kann die Zufuhr blockiert und die Produktionsgeschwindigkeit der Blasformmaschine 102 und der Behälterbehandlungsmaschine 104 angepasst werden und analog die Heizleistung des wenigstens einen Heizelements der Heizeinrichtung 101 angepasst werden. Anschließend kann die Zufuhr von Vorformlingen an die Heizeinrichtung durch Betätigen des Blockierelements 160 wieder freigegeben und der Betrieb mit der reduzierten oder veränderten Produktionsgeschwindigkeit fortgesetzt werden.

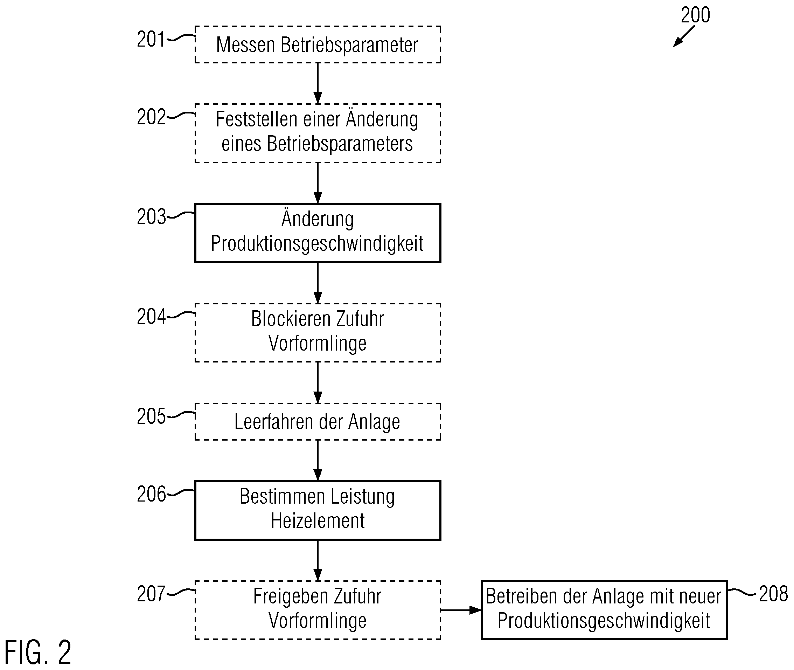

Figur 2 zeigt ein Fließschema eines Verfahrens 200 entsprechend einer Ausführungsform, mit dem ein Betreiben der Anlage bei sich verändernder Produktionsgeschwindigkeit möglich ist.

Das Verfahren 200 beginnt mit zwei optionalen Schritten 201 und 202, wobei im Schritt 201 eine bevorzugt kontinuierliche Messung des Betriebsparameters, wie beispielsweise der Produkttemperatur im Produkttank, erfolgt. Wird festgestellt, dass sich der Wert des Betriebsparameters über einen zulässigen Toleranzwert hinaus ändert 202 kann die Steuereinheit im Schritt 203 bestimmen, wie die Produktionsgeschwindigkeit der Behälterbehandlungsmaschine und der Blasformmaschine angepasst werden muss. Dies kann beispielsweise unter Verwendung der bereits beschriebenen Produktionskennlinie erfolgen.

Anschließend oder basierend darauf kann dann ein Bestimmen einer notwendigen Veränderung oder eines neuen Werts der Leistung wenigstens eines Heizelements im Schritt 206 erfolgen. Die Steuereinheit kann dann den Transport der Behälter durch die Blasformmaschine und die Behälterbehandlungsmaschine entsprechend der neuen Produktionsgeschwindigkeit durch Ansteuern der Antriebe der Transporteinrichtungen, wie beispielsweise des Karussells der jeweiligen Maschine, anpassen und durch Anpassen der Leistung der Heizelemente im Schritt 208 ein Betreiben der Anlage mit der neuen Produktionsgeschwindigkeit ermöglichen, ohne dass der Betrieb der Anlage unterbrochen bzw. Vorformlinge oder Behälter ausgeschleust werden müssten.

Wie bereits beschrieben kann jedoch optional auch vorgesehen sein, dass ein Blockieren der Vorformlingszufuhr im Schritt 204 erfolgt und anschließend die gesamte Anlage oder zumindest die Heizeinrichtung im Schritt 205 leergefahren wird und erst wenn die notwendige Änderung der Produktionsgeschwindigkeit im Schritt 203 und die notwendige Änderung der Leistung des oder der Heizelemente im Schritt 206 erfolgt ist, kann ein erneutes Freigeben der Zufuhr der Vorformlinge erfolgen, sodass neue Vorformlinge der Heizeinrichtung und der Blasformmaschine sowie der Behälterbehandlungsmaschine nur dann zugeführt werden, wenn die Produktionsgeschwindigkeit der Blasformmaschine und der Behälterbehandlungsmaschine bereits angepasst wurde und die Leistung der Heizelemente entsprechend der veränderten Produktionsgeschwindigkeit ebenfalls angepasst wurde.

Die Anordnung der optionalen Schritte 204 und 205 zwischen der Bestimmung der Änderung der Produktionsgeschwindigkeit und der Bestimmung der geänderten Leistung der Heizelemente ist dabei so nicht zwingend. Es kann auch vorgesehen sein, dass die Schritte 204 und 205 direkt nach der Feststellung einer Änderung eines Betriebsparameters, der prinzipiell eine Änderung der Produktionsgeschwindigkeit erforderlich macht, erfolgen und während des Leerfahrens dann die geänderte Produktionsgeschwindigkeit und die geänderte Heizleistung entsprechend der Schritte 203 und 206 bestimmt wird. Die Freigabe der Zufuhr der Vorformlinge findet jedoch bevorzugt im Schritt 207 erst statt, nachdem die Produktionsgeschwindigkeit der Blasformmaschine und der Behälterbehandlungsmaschine auf den neuen Wert angepasst wurde und auch die Heizleistung der Heizelemente auf den neuen Wert angepasst wurde.

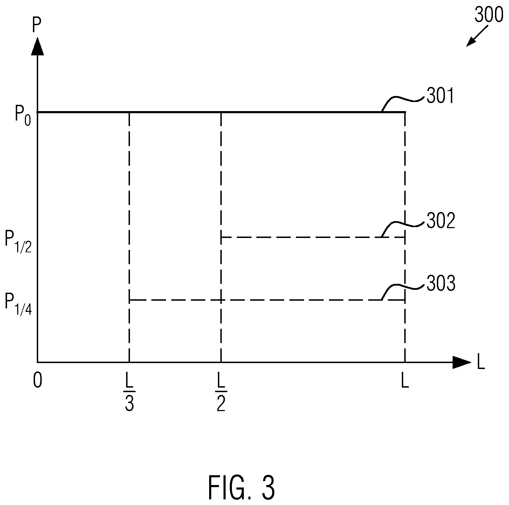

Die Figur 3 zeigt schematisch die Leistung P von Heizelementen abhängig von ihrer Position entlang der Länge L der Heizeinrichtung. Die Darstellung ist nicht darauf beschränkt, dass die Heizeinrichtung als lineare Heizeinrichtung, wie beispielsweise als länglicher Ofen, ausgeführt ist, durch den die Vorformlinge entlang genau einer Richtung geführt werden. Unter der Länge L ist vielmehr die von den Vorformlingen zurückgelegte Wegstrecke in der Heizeinrichtung zu verstehen. Die Länge L muss nicht die Gesamtlänge der Heizeinrichtung sein, stellt jedoch ein Maß für die Wegstrecke dar, entlang der die Vorformlinge durch Heizelemente tatsächlich erwärmt werden können. Umfasst die Heizeinrichtung beispielsweise einen 1m langen Zuführbereich für das Übergeben der Vorformlinge an die Heizeinrichtung und einen 1m langen Übergabebereich für das Übergeben der erwärmten Vorformlinge an eine nachgeordnete Einrichtung und besitzt eine Gesamtlänge G, und sind in diesen Bereichen keine Heizelemente angeordnet, kann die Länge L beispielsweise G-2m sein.

Während die hier dargestellten Funktionen für die Leistung P entlang der zurückgelegten Wegstrecke als kontinuierlich dargestellt sind, versteht es sich, dass diese üblicherweise nur abschnittsweise definiert sind, nämlich in einem jeweiligen Bereich eines Heizelements, und daher eher diskontinuierlichen Charakter aufweisen werden. In der vereinfachten Darstellung wurden jedoch durchgängige Funktionen verwendet.

In der Darstellung ist eine erste Kurve 301 gezeigt, bei der die Leistung aller Heizelemente entlang des von den Vorformlingen zurückgelegten Weges L vom Anfang der Heizeinrichtung (bzw. vom Beginn der Heizelemente, wie oben diskutiert) beim Punkt 0 bis zur Länge L konstant ist. Diese Kurve soll als Ausgangspunkt für die nachfolgende Diskussion dienen, wobei ein über die gesamte Länge der Heizeinrichtung konstanter Wert der Leistung P₀ sämtlicher Heizelemente hier nur beispielhaft zu verstehen ist. Es kann auch vorgesehen sein, dass bei einer gegebenen, beispielsweise der normalen Produktionsgeschwindigkeit, die Leistung der Heizelemente entlang der Länge der Heizeinrichtung bereits variiert, beispielsweise um die Vorformlinge zunächst geringfügig und anschließend immer schneller zu erwärmen. In einem solchen Fall würde die Kurve 301 beispielsweise bei Beginn der Heizeinrichtung bei Punkt 0 bei einem geringeren Wert beginnen und bis zur Länge L anwachsen. Auch andere Ausgestaltungen sind denkbar, bei denen die Heizleistung ausgehend vom Beginn der Heizeinrichtung bis zu einem Maximum ansteigt und bis zum Ende der Heizeinrichtung wieder abfällt.

In Figur 3 ist ein erster Fall gezeigt, bei dem ein Vorformling bereits die halbe Länge L/2 der Heizeinrichtung durchlaufen hat und anschließend die Produktionsgeschwindigkeit auf die Hälfte des ursprünglichen Wertes reduziert wurde. Damit muss auch die Transportgeschwindigkeit des Vorformlings in der Heizeinrichtung um die Hälfte reduziert werden, um ein Aufstauen von Vorformlingen zu vermeiden. Würde die Leistung der Heizelemente, an denen der Vorformling auf dem Weg von der Position L/2 bis L vorbeitransportiert wird, unverändert bleiben, würde der Vorformling aufgrund der geringeren Transportgeschwindigkeit bei gleichbleibender Leistung einen höheren Wärmeeintrag erfahren. Um dies zu verhindern, ist in einer Ausführungsform vorgesehen, dass in diesem Fall die Leistung der Heizelemente stromauf des Vorformlings, also beginnend bei L/2 bis zum Ende der Heizeinrichtung bei L, auf die Hälfte P_{1/2} reduziert wird, wie dies mit der Kurve 302 dargestellt ist.

Analoges gilt für den Fall, dass ein Vorformling bereits ein Drittel der Wegstrecke in der Heizeinrichtung L/3 durchlaufen hat und die Produktionsgeschwindigkeit von dem Ausgangswert auf ein Viertel reduziert wird. Damit vervierfacht sich die Verweildauer des Vorformlings in den verbleibenden zwei Drittel des Ofens ebenfalls, sodass der Durchsatz der reduzierten Produktionsgeschwindigkeit angepasst ist. Entsprechend muss die Leistung der Heizeinrichtungen von L/3 bis L auf ein Viertel, also P_{1/4}, reduziert werden, wie dies mit dem Graphen 303 gezeigt ist.

Unter der Annahme, dass die Heizelemente ohne zeitliche Verzögerung und ohne Abkühlzeit in ihrer Leistung regelbar sind, würde sich mit diesen beispielhaften Ausführungsformen durch Reduktion der ausgegebenen Leistung aller Heizelemente um einen geeigneten Faktor für jeden beliebigen Vorformling, der sich gerade in der Heizeinrichtung befindet, gewährleisten lassen, dass dessen gesamte aufgenommene Wärmemenge genau gleich der aufgenommenen Wärmemenge der Referenzproduktionsgeschwindigkeit entsprechend der Kurve 301 ist.

Dies ist jedoch nicht zwingend der Fall, da beispielsweise ein Abkühlen der Heizelemente erforderlich sein kann, wenn die ausgebrachte Leistung reduziert wird. Ein solcher Abkühlvorgang erfordert eine gewisse Zeit, was dazu führt, dass die ausgegebene Leistung der Heizelemente gegebenenfalls nicht instantan, also ohne zeitliche Verzögerung, von einem ersten Wert auf einen zweiten Wert eingestellt werden kann. Dem kann dadurch Rechnung getragen werden, dass für die in den Vorformling eingebrachte Heizleistung ein Grenzwert berücksichtigt wird, der, wie oben beschrieben, einen Toleranzwert oberhalb einer Soll-Wärmemenge umfassen kann, bis zudem ein Erwärmen des Vorformlings noch zulässig ist.

Die Steuereinheit kann dann unter Berücksichtigung beispielsweise geeigneter Modelle für das Heizverhalten der Heizelemente bei Verändern der Heizleistung bestimmen, wie jedes Heizelement geregelt werden muss, um sicherzustellen, dass alle in der Heizeinrichtung verbleibenden Vorformlinge einen Wärmeeintrag erfahren, der nicht oberhalb des Grenzwertes liegt. Wird festgestellt, dass dies aufgrund der technischen Randbedingungen der Heizelemente nicht gewährleistet werden kann, kann beispielsweise eine Ausgabe an einem Bedienerterminal erfolgen und/oder vorgesehen sein, dass ein Blockieren der Zufuhr von Vorformlingen in die Heizeinrichtung erfolgt (wie im Zusammenhang mit den Figuren 1 und 2 beschrieben) und zunächst kein weiteres Erwärmen der Vorformlinge bzw. Verarbeiten der Vorformlinge zu Behältern erfolgt und die Vorformlinge, die nicht mit der unterhalb des Grenzwertes liegenden Wärmemenge beaufschlagt werden können, aus der Heizeinrichtung bzw. nach Verlassen der Heizeinrichtung ausgeschleust werden. Nachfolgende Vorformlinge können dann nach Regelung der Heizelemente auf die notwendige Heizleistung erneut der Heizeinrichtung zugeführt werden.

## Patentansprüche

1. Anlage zum Herstellen und Behandeln von Behältern, die Anlage umfassend eine Heizeinrichtung mit einer Vielzahl von Heizelementen zum Erwärmen eines durch die Heizeinrichtung transportierten Vorformlings, eine Blasformmaschine stromab der Heizeinrichtung zum Ausformen des Vorformlings zu einem Behälter, eine Behälterbehandlungsmaschine stromab der Blasformmaschine zum Behandeln eines Behälters, wobei die Heizeinrichtung, die Blasformmaschine und die Behälterbehandlungsmaschine bei verschiedenen Produktionsgeschwindigkeiten synchron betreibbar sind, wobei die Anlage weiterhin eine Steuereinheit umfasst, die ausgebildet ist, eine Leistung wenigstens eines der Heizelemente abhängig von einer Änderung der Produktionsgeschwindigkeit der Blasformmaschine oder der Behälterbehandlungsmaschine so anzupassen, dass eine insgesamt einem Vorformling zugeführte Wärmemenge in der Heizeinrichtung einen vorgegebenen Grenzwert nicht überschreitet.

2. Anlage nach Anspruch 1, wobei die Steuereinheit ausgebildet ist, die Leistung des wenigstens einen Heizelements basierend auf einer einem in der Heizeinrichtung transportierten Vorformling bereits zugeführten Wärmemenge anzupassen, sodass die zugeführte Wärmemenge in der Heizeinrichtung den vorgegebenen Grenzwert nicht überschreitet.

3. Anlage nach Anspruch 1 oder 2, wobei der vorgegebene Grenzwert durch eine Soll-Wärmemenge und einen Toleranzwert festgelegt ist.

4. Anlage nach einem der Ansprüche 1 bis 3, wobei die Behälterbehandlungsmaschine ein Füller zum Einfüllen eines Produkts in einen Behälter ist und wobei der Füller einen Sensor zum Bestimmen eines Betriebsparameters des Füllers umfasst, wobei die Steuereinheit ausgebildet ist, die Änderung der Produktionsgeschwindigkeit abhängig von einer Änderung des Betriebsparameters zu bestimmen.

5. Anlage nach Anspruch 4, wobei der Sensor ein Temperatursensor ist und wobei der Betriebsparameter eine Produkttemperatur in einem Produkttank, einer produktführenden Leitung, einem Produktverteiler und/oder einem Füllventil ist.

6. Anlage nach Anspruch 4 oder 5, wobei die Steuereinheit ausgebildet ist, die Änderung der Produktionsgeschwindigkeit basierend auf der Änderung des Betriebsparameters und einer Produktionskennlinie des Füllers und/oder der Blasformmaschine zu bestimmen.

7. Anlage nach einem der Ansprüche 1 bis 6, wobei die Steuereinheit ausgebildet ist, basierend auf einer notwendigen Änderung der Produktionsgeschwindigkeit eine Zufuhr von Vorformlingen an die Heizeinrichtung zu blockieren und einen Transport von Vorformlingen durch die Heizeinrichtung und/oder einen Transport von Behältern durch die Blasformmaschine und/oder die Behälterbehandlungsmaschine zu steuern, wobei die Steuereinheit ausgebildet ist, die Produktionsgeschwindigkeit der Heizeinrichtung, der Blasformmaschine und der Behälterbehandlungsmaschine zu ändern, wenn keine Vorformlinge und Behälter in der Heizeinrichtung, der Blasformmaschine und der Behälterbehandlungsmaschine vorhanden sind und anschließend die Zufuhr von Vorformlingen freizugeben.

8. Verfahren zum Herstellen und Behandeln von Behältern mit einer Anlage zum Herstellen und Behandeln von Behältern, die Anlage umfassend eine Heizeinrichtung mit einer Vielzahl von Heizelementen zum Erwärmen eines durch die Heizeinrichtung transportierten Vorformlings, eine Blasformmaschine stromab der Heizeinrichtung zum Ausformen des Vorformlings zu einem Behälter, eine Behälterbehandlungsmaschine stromab der Blasformmaschine zum Behandeln des Behälters, wobei die Heizeinrichtung, die Blasformmaschine und die Behälterbehandlungsmaschine bei verschiedenen Produktionsgeschwindigkeiten synchron betreibbar sind, wobei die Anlage weiterhin eine Steuereinheit umfasst, die eine Leistung wenigstens eines der Heizelemente abhängig von einer Änderung der Produktionsgeschwindigkeit der Blasformmaschine oder der Behälterbehandlungsmaschine so anpasst, dass eine insgesamt einem Vorformling zugeführte Wärmemenge in der Heizeinrichtung einen vorgegebenen Grenzwert nicht überschreitet.

9. Verfahren nach Anspruch 8, wobei die Steuereinheit die Leistung des wenigstens einen Heizelements basierend auf einer einem in der Heizeinrichtung transportierten Vorformling bereits zugeführten Wärmemenge anpasst, sodass die zugeführte Wärmemenge in der Heizeinrichtung den vorgegebenen Grenzwert nicht überschreitet.

10. Verfahren nach Anspruch 9, wobei die Steuereinheit die Leistung eines stromauf eines in der Heizeinrichtung transportierten Vorformlings abhängig von der bereits zugeführten Wärmemenge und der veränderten Produktionsgeschwindigkeit und einer verbleibenden Verweildauer des Vorformlings in der Heizeinrichtung oder einer verbleibenden Wegstrecke des Vorformlings in der Heizeinrichtung steuert, sodass die die zugeführte Wärmemenge in der Heizeinrichtung den vorgegebenen Grenzwert nicht überschreitet.

11. Verfahren nach einem der Ansprüche 8 bis 10, wobei der vorgegebene Grenzwert durch eine Soll-Wärmemenge und einen Toleranzwert festgelegt ist.

12. Verfahren nach einem der Ansprüche 8 bis 11, wobei die Behälterbehandlungsmaschine ein Füller zum Einfüllen eines Produkts in einen Behälter ist und wobei der Füller einen Sensor zum Bestimmen eines Betriebsparameters des Füllers umfasst, wobei die Steuereinheit die Änderung der Produktionsgeschwindigkeit abhängig von einer Änderung des Betriebsparameters bestimmt.

13. Verfahren nach Anspruch 12, wobei der Sensor ein Temperatursensor ist und wobei der Betriebsparameter eine Produkttemperatur in einem Produkttank, einer produktführenden Leitung, einem Produktverteiler und/oder einem Füllventil ist.

14. Verfahren nach Anspruch 12 oder 13, wobei die Steuereinheit die Änderung der Produktionsgeschwindigkeit basierend auf der Änderung des Betriebsparameters und einer Produktionskennlinie des Füllers und/oder der Blasformmaschine bestimmt.

15. Verfahren nach einem der Ansprüche 8 bis 14, wobei die Steuereinheit basierend auf einer notwendigen Änderung der Produktionsgeschwindigkeit eine Zufuhr von Vorformlingen an die Heizeinrichtung blockiert und einen Transport von Vorformlingen durch die Heizeinrichtung und/oder einen Transport von Behältern durch die Blasformmaschine und/oder die Behälterbehandlungsmaschine steuert, wobei die Steuereinheit die Produktionsgeschwindigkeit der Heizeinrichtung, der Blasformmaschine und der Behälterbehandlungsmaschine ändert, wenn keine Vorformlinge und Behälter in der Heizeinrichtung, der Blasformmaschine und der Behälterbehandlungsmaschine vorhanden sind und anschließend die Zufuhr von Vorformlingen freigibt.
